# EUROPÄISCHE PATENTANMELDUNG

(11) **EP 2 230 429 A1**
(43) Veröffentlichungstag der Anmeldung: **22.09.2010**
(21) Anmeldenummer: 09003788.8
(22) Anmeldetag: 16.03.2009
(51) Int. Cl.: F16K 31/56, F16K 47/02, F01D 17/14, F16K 1/44, F16K 3/26

(54) **Platzsparendes Regel-Schnellschluss-Ventil für eine Dampfturbine**

(71) Anmelder: Siemens Aktiengesellschaft, 80333 München (DE)
(72) Erfinder: Bennauer, Martin, 46242 Bottrop (DE); Flohr, Ningsih, 45481 Mülheim a.d. Ruhr (DE); Nienhaus, Michael, 46325 Borken (DE); Schindler, Christoph, 45219 Essen (DE); Weltersbach, Dirk, 44805 Bochum (DE)

(57) **Zusammenfassung**

Ein Regel-Schnellschluss-Ventil für eine Dampfturbine weist ein Ventilgehäuse (2) und einen Regelventilkegel (8), der in dem Ventilgehäuse (2) entlang seiner Mittelachse verschiebbar angeordnet ist, wodurch der Regelventilkegel (8) in eine Offenstellung, in der der Regelventilkegel (8) mit seinem Regelventilkegelmantel (10) von dem Ventilgehäuse (2) abgehoben ist, und in eine Geschlossenstellung bringbar ist, in der der Regelventilkegel (8) mit seinem Regelventilkegelmantel (10) an dem Ventilgehäuse (2) anliegt, sowie einen Schnellschlussventilkolben (13) auf, der der dem Regelventilkegelmantel (8) abgewandten Regelventilkegelrückseite (11) zugewandt in dem Ventilgehäuse (2) angeordnet ist und an seinem Außenumfangsrand (20) an dem Ventilgehäuse (2) stets dampfdicht anliegt sowie eine Durchlassöffnung (15) aufweist, durch die Dampf (5) von der dem Regelventilkegel (8) abgewandten Seite des Schnellschlussventilkolbens (13) zu der dem Regelventilkegel (8) zugewandten Seite des Schnellschlussventilkolbens (13) passierbar ist, wobei der Schnellschlussventilkolben (13) in dem Ventilgehäuse (2) parallel zur Mittelachse des Regelventilkegels (8) verschiebbar angeordnet und dadurch an die Regelventilkegelrückseite (11) anlegbar ist, wodurch die Durchlassöffnung (15) für den Dampf (5) unpassierbar ist.

## Beschreibung

Die Erfindung betrifft ein Regel-Schnellschluss-Ventil für eine Dampfturbine, wobei in dem Regel-Schnellschluss-Ventil ein Regelventil und ein Schnellschlussventil miteinander kombiniert sind.

An einer Dampfturbine, die beispielsweise in einem Dampfkraftwerk eingesetzt ist, ist für den sicheren Betrieb der Dampfturbine frischdampfseitig eine Absperrung durch ein Schnellschlussventil und zur Regelung der Frischdampfzufuhr zu der Dampfturbine ein Regelventil vorgesehen. Das Regelventil und das Schnellschlussventil sind hintereinander jeweils in ein separates Ventilgehäuse eingebaut. Aus Sicherheitsgründen ist die Schnellschlussfähigkeit durch das Regelventil und das Schnellschlussventil redundant bereitgestellt. Das Regelventil und das Schnellschlussventil weisen jeweils eigene Tellerfedern auf, die im Störfall zum schnellen Schließen der Ventile führen. Herkömmlich sind das Schnellschlussventil und das Regelventil als in Reihe geschaltete Hubventile ausgeführt, wobei eines der Hubventile die Schnellschlussfunktion ausübt und mit dem anderen Hubventil die Frischdampfmassenstromregelung bewerkstelligt wird. Die Hubventile sind beispielsweise als Einsetzventile gebaut, die wegen ihrer guten Dichtheit und ihres geringen Druckverlusts vorteilhaft sind. Allerdings sind herkömmlich die Hubventile mit einem großen und schweren Gehäuse konstruiert, woraus ein hoher Materialeinsatz resultiert. Die Folge hiervon ist ein hoher Herstellungsaufwand bei hohen Kosten. Ferner haben die herkömmlichen Hubventile einen großen Platzbedarf, so dass die frischdampfseitige Verrohrung an dem Dampfturbinengehäuse entsprechend voluminös ausfällt.

Aufgabe der Erfindung ist es ein Regel-Schnellschluss-Ventil für eine Dampfturbine zu schaffen, wobei das Regel-Schnellschluss-Ventil eine kompakte und materialeinsparende sowie eine kostengünstige Konstruktion hat.

Das erfindungsgemäße Regel-Schnellschluss-Ventil für eine Dampfturbine weist ein Ventilgehäuse und einen Regelventilkegel, der in dem Ventilgehäuse entlang seiner Mittelachse verschiebbar angeordnet ist, wodurch der Regelventilkegel in eine Offenstellung, in der der Regelventilkegel mit seinem Regelventilkegelmantel von dem Ventilgehäuse abgehoben ist, und in eine Geschlossenstellung bringbar ist, in der der Regelventilkegel mit seinem Regelventilkegelmantel an dem Ventilgehäuse anliegt, sowie einen Schnellschlussventilkolben auf, der der dem Regelventilkegelmantel abgewandten Regelventilkegelrückseite zugewandt in dem Ventilgehäuse angeordnet ist und an seinem Außenumfangsrand an dem Ventilgehäuse stets dampfdicht anliegt sowie eine Durchlassöffnung aufweist, durch die Dampf von der dem Regelventilkegel abgewandten Seite des Schnellschlussventilkolbens zu der dem Regelventilkegel zugewandten Seite des Schnellschlussventilkolbens passierbar ist, wobei der Schnellschlussventilkolben in dem Ventilgehäuse parallel zur Mittelachse des Regelventilkegels verschiebbar angeordnet und dadurch an die Regelventilkegelrückseite anlegbar ist, wodurch die Durchlassöffnung für den Dampf unpassierbar ist.

Somit sind in dem erfindungsgemäßen Regel-Schnellschluss-Ventil ein Regelventil und ein Schnellschlussventil kombiniert in das einteilige Ventilgehäuse eingebaut, wobei das Regelventil mit dem Regelventilkegel und das Schnellschlussventil mit dem Schnellschlussventilkolben einen gemeinsamen Ventilsitz haben. Mit dem Regelventilkegel ist der Dampfmassenstrom am Ventilgehäuse absperrbar, während mit dem Schnellschlussventilkolben der Dampfmassenstrom am Regelventilkegel absperrbar ist. Dadurch, dass das Regelventil und das Schnellschlussventil in dem erfindungsgemäßen Regel-Schnellschluss-Ventil miteinander kombiniert sind, hat das Regel-Schnellschluss-Ventil eine platzsparende Anordnung. Damit ist das Volumen des Ventilgehäuses verglichen mit den herkömmlichen Ventilgehäusen für ein herkömmliches Regelventil und ein herkömmliches Schnellschlussventil reduziert, wodurch der Materialeinsatz und letztlich die Herstellungskosten für das erfindungsgemäße Regel-Schnellschluss-Ventil reduziert sind.

Das Ventilgehäuse weist bevorzugt eine Dampfeintrittsöffnung, die dem Schnellschlussventilkolben zugewandt angeordnet ist, und eine Dampfaustrittsöffnung auf, die dem Regelventilkegel zugewandt angeordnet ist. Bevorzugtermaßen weist das Ventilgehäuse einen konischen Gehäuseabschnitt, mit dem der Regelventilkegel mit seinem Regelventilkegelmantel einen Regelventilsitz bildet, und einen zylindrischen Gehäuseabschnitt auf, von dem der Schnellschlussventilkolben geführt ist. Dadurch ist an dem Regelventilkegelsitz der Massenstrom des Dampfs mit dem Regelventilkegel sowohl regelbar als auch im Schnellschluss versperrbar.

Bevorzugtermaßen weist der Schnellschlussventilkolben einen Kolbenring auf, der an dem zylindrischen Gehäuseabschnitt gleitbar anliegt. Dadurch ist der Schnellschlussventilkolben mit dem Kolbenring sicher und dicht an dem zylindrischen Gehäuseabschnitt geführt. Der Schnellschlussventilkolben weist ferner bevorzugt an seinem Außenrand einen der Regelventilkegelrückseite zugewandten, umlaufenden Vorsprung auf, mit dem der Schnellschlussventilkolben an die Regelventilkegelrückseite anlegbar ist, so dass die Durchlassöffnung für den Dampf unpassierbar ist. Somit ist durch das Anlegen des Schnellschlussventilkolbens an die Regelventilkegelrückseite mit seinem Vorsprung die Schnellschlussfunktion bewerkstelligbar, wenn gleichzeitig der Regelventilkegel mit seinem Regelventilkegelmantel an dem Regelventilsitz anliegt.

Es ist bevorzugt, dass die Mittelachse des Regelventilkegels und die Mittelachse des Schnellschlussventilkolbens zusammenfallen. Dadurch hat das erfindungsgemäße Regel-Schnellschluss-Ventil eine achssymmetrische Konstruktion, die platzsparend ist. Ferner weist der Regelventilkegel eine Regelventilspindel und der Schnellschlussventilkolben mindestens eine Schnellschlussventilspindel auf, wobei die Spindeln parallel zu den Mittelachsen längsverschiebbar sind. Die Regelventilspindel ist bevorzugt an der Regelventilkegelrückseite angebracht und durch den Schnellschlussventilkolben hindurchgeführt angeordnet.

Das Ventilgehäuse weist bevorzugt einen Gehäusewandabschnitt auf, der für die Regelventilspindel und für die Schnellschlussventilspindel jeweils ein Spindelführungsloch aufweist, durch das die entsprechende Spindel geführt ist. Dabei ist bevorzugt jede Spindel außerhalb des Gehäusewandabschnitts mit einem Tellerfederpaket zur Betätigung der jeweiligen Spindel versehen.

Im Folgenden wird eine bevorzugte Ausführungsform des erfindungsgemäßen Regel-Schnellschluss-Ventils anhand der beigefügten schematischen Zeichnungen erläutert. Es zeigen:
- Fig. 1: die erfindungsgemäße Ausführungsform des Regel-Schnellschluss-Ventils, wobei das Regelventil und das Schnellschlussventil geschlossen sind,
- Fig. 2: die in Fig. 1 gezeigte Ausführungsform, wobei das Regelventil geschlossen und das Schnellschlussventil geöffnet ist,
- Fig. 3: die in Fig. 1 gezeigte Ausführungsform, wobei sowohl das Regelventil als auch das Schnellschlussventil geöffnet sind, und
- Fig. 4: die in Fig. 1 gezeigte Ausführungsform, wobei das Regelventil geöffnet und das Schnellschlussventil geschlossen ist.

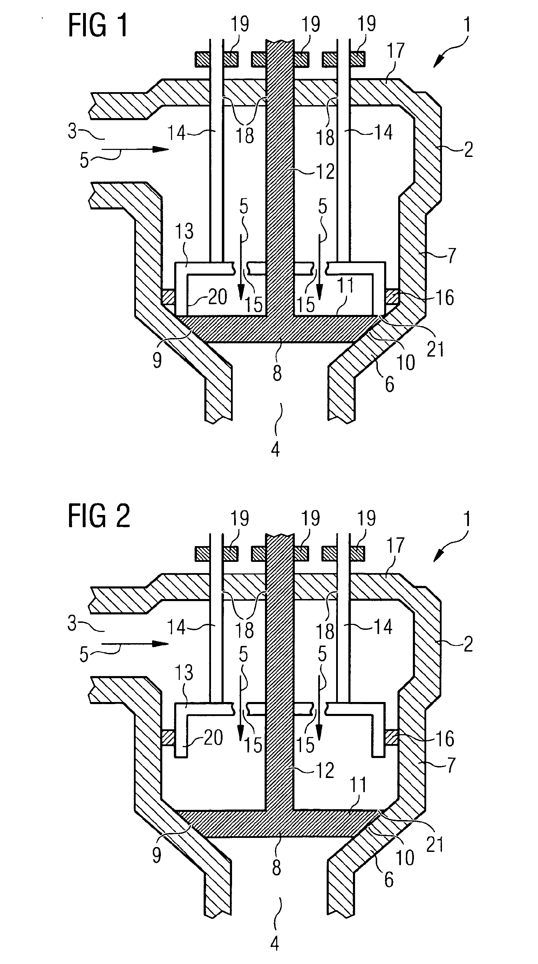

Wie es aus Fig. 1 bis 4 ersichtlich ist, weist ein Regel-Schnellschluss-Ventil 1 ein Ventilgehäuse 2 auf, in dem eine Dampfeintrittsöffnung 3 und eine Dampfaustrittsöffnung 4 vorgesehen sind. Das Regel-Schnellschluss-Ventil 1 ist mit der Dampfaustrittsöffnung 4 an einen Frischdampfstutzen der Dampfturbine anzubauen, wobei an die Dampfeintrittsöffnung 3 eine Frischdampfleitung einer Frischdampfschiene anzuschließen ist. Durch die Dampfeintrittsöffnung 3 tritt Frischdampf in das Regel-Schnellschluss-Ventil 1 ein und wird durch die Dampfaustrittsöffnung 4 an die Dampfturbine abgegeben, so dass sich in dem Regel-Schnellschluss-Ventil 1 eine Dampfströmung 5 ausbildet. In Fig. 1 bis 4 ist die Dampfeintrittsöffnung 3 in dem Ventilgehäuse 2 waagerecht verlaufend angeordnet, so dass die Dampfströmung 5 im Bereich der Dampfeintrittsöffnung 3 horizontal verläuft. Beim Durchströmen des Regel-Schnellschluss-Ventils 1 passiert der Dampf einen zylindrischen Gehäuseabschnitt 7 und danach einen konischen Gehäuseabschnitt 6 und tritt dann durch die Dampfaustrittsöffnung 4 aus dem Ventilgehäuse 2 aus. In Fig. 1 bis 4 ist die Dampfaustrittsöffnung 4 in dem Ventilgehäuse 2 senkrecht nach unten verlaufend angeordnet, so dass die Dampfströmung 5 im Bereich der Dampfaustrittsöffnung 4 vertikal verläuft.

In dem Ventilgehäuse 2 ist ein Regelventilkegel 8 angeordnet, der einen der Dampfaustrittsöffnung 4 zugewandten Regelventilkegelmantel 10 aufweist, mit dem der Regelventilkegel 8 an dem konischen Gehäuseabschnitt 6 einen Regelventilsitz 9 ausbildet. Der Regelventilkegel 8 ist in dem Ventilgehäuse 2 so angeordnet, dass in Fig. 1 bis 4 die Mittelachse des Regelventilkegels 8 senkrecht verläuft. Dem Regelventilmantel 10 abgewandt weist der Regelventilkegel 8 eine Regelventilkegelrückseite 11 auf. Ferner weist der Regelventilkegel 8 eine Regelventilspindel 12 auf, die auf der Mittelachse des Regelventilkegels 8 liegend und mit ihrer Stirnseite mittig an der Regelventilkegelrückseite 11 befestigt ist. Der Regelventilkegelrückseite 11 zugewandt ist ein Gehäusewandabschnitt 17 des Ventilgehäuses 2 vorgesehen, der im Wesentlichen parallel zu der Regelventilkegelrückseite 11 verläuft. In dem Gehäusewandabschnitt 17 ist ein Spindelführungsloch 18 vorgesehen, durch das die Regelventilspindel 12 sich erstreckt und entlang der Mittelachse des Regelventilkegels 8 verschiebbar geführt ist. Außerhalb des Ventilgehäuses 2 an dem Gehäusewandabschnitt 17 ist an der Regelventilspindel 12 ein Tellerfederpaket 19 zum Betätigen der Regelventilspindel 12 angebaut.

Der Regelventilkegel 8 ist in dem Ventilgehäuse 2 entlang seiner Mittelachse längsverschiebbar angeordnet, wobei der Regelventilkegel 8 durch Aufbringen einer Verschiebekraft auf die Regelventilspindel 12 beispielsweise von außerhalb des Ventilgehäuses 2 verschoben werden kann. Dadurch kann der Regelventilkegelmantel 10 an dem konischen Gehäuseabschnitt 8 angelegt oder abgehoben angeordnet sein, wodurch bei einer entsprechenden Betätigung des Regelventilkegels 8 die Funktion eines Regelventils mit dem Regel-Schnellschluss-Ventil 1 ausgeübt werden kann.

Ferner weist das Regel-Schnellschluss-Ventil 1 einen Schnellschlussventilkolben 13 auf, der in dem zylindrischen Gehäuseabschnitt 7 der Regelventilkegelrückseite 11 zugewandt angeordnet ist. An dem Schnellschlussventilkolben 13 sind zwei Schnellschlussventilspindeln 14 angebracht, die sich parallel zu der Mittelachse des Regelventilkegels 8 erstrecken und durch jeweils ein weiteres Spindelführungsloch 18 in dem Gehäusewandabschnitt 17 längsverschiebbar gelagert sind. An dem Außenrand des Schnellschlussventilkolbens 13 ist ein Kolbenring 16 angebracht, der zwischen dem Schnellschlussventilkolben 13 und dem zylindrischen Gehäuseabschnitt 7 vorgesehen ist und in jeder Position des Schnellschlussventilkolbens 13 dampfdicht abdichtet. Der Schnellschlussventilkolben 13 ist parallel zu der Mittelachse des Regelventilkegels 8 und via den Schnellschlussventilspindeln 14 betätigbar angeordnet, wobei beim Verschieben des Schnellschlussventilkolbens 13 der Kolbenring 16 an dem zylindrischen Gehäuseabschnitt 7 gleitet. An seinem Außenrand weist der Schnellschlussventilkolben 13 einen umlaufenden Vorsprung 20 auf, der vertikal in Richtung zu der Regelventilkegelrückseite 11 sich erstreckt und an der Regelventilkegelrückseite 11 unter Ausbilden eines Schnellschlussventilsitzes 21 dampfdicht anlegbar ist. Ferner weist der Schnellschlussventilkolben 13 zwei Durchlassöffnungen 15 auf, durch die Dampf von der Seite des Schnellschlussventilkolbens 13, die der Regelventilkegelrückseite 11 abgewandt ist, zu der Seite des Schnellschlussventilkolbens 13, die der Regelventilkegelrückseite 11 zugewandt ist, strömen kann.

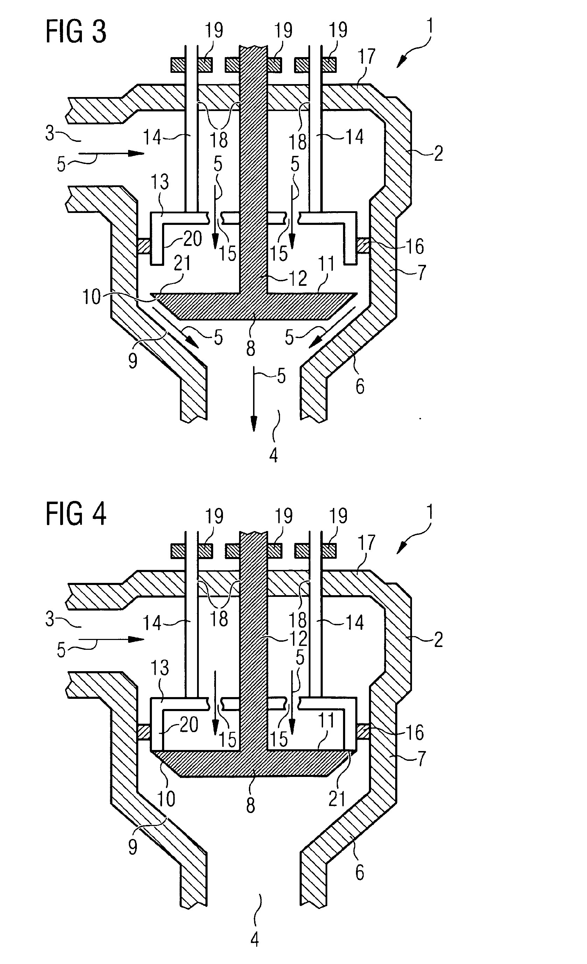

In Fig. 1 und 2 ist in dem Regel-Schnellschluss-Ventil 1 der Regelventilkegel 8 mit seinem Regelventilkegelmantel 10 an dem konischen Gehäuseabschnitt 6 angelegt, so dass der Regelventilsitz 9 für Dampf unpassierbar ist. In Fig. 3 ist der Regelventilkegel 8 von dem konischen Gehäuseabschnitt 6 abgehoben, so dass an dem Regelventilsitz 9 Dampf passierbar ist, wobei mit dem Abstand zwischen dem Regelventilkegel 8 und dem konischen Gehäuseabschnitt 6 der passierende Dampfmassenstrom definiert ist. In Fig. 4 ist der Regelventilkegel 8 weiter von dem konischen Gehäuseabschnitt 6 abgehoben, so dass an dem Regelventilsitz 9 ein höherer Dampfmassenstrom passierbar ist, verglichen mit dem Dampfmassenstrom, der in dem Regel-Schnellschluss-Ventil 1 gemäß Fig. 3 passierbar ist.

In Fig. 2 und 3 ist der Schnellschlussventilkolben 13 von dem Regelventilkegel 8 abgehoben angeordnet, wobei mit dem Kolbenring 16 der Schnellschlussventilkolben 13 an dem zylindrischen Gehäuseabschnitt 7 dampfdicht anliegt. Durch die Durchlassöffnungen 15 ist Dampf in einen Zwischenraum zwischen dem Schnellschlussventilkolben 13 und dem Regelventilkegel 8 strömbar. Dadurch, dass der Vorsprung 20 in Fig. 2 und 3 nicht an der Regelventilkegelrückseite 11 anliegt, ist der Schnellschlussventilsitz 21 für Dampf passierbar. Jedoch liegt in Fig. 2 der Regelventilkegel 8 mit seinem Regelventilkegelmantel 10 an dem konischen Gehäuseabschnitt 6 an, so dass der Regelventilsitz 9 geschlossen ist. Dadurch kann die Dampfströmung 5 zwar den Schlussschlussventilkolben 13 durch die Durchlassöffnungen 15 passieren und gelangt via den Schnellschlussventilsitz 21 an den Regelventilsitz 9, von dem gemäß Fig. 2 das Regel-Schnellschluss-Ventil 1 geschlossen ist.

Gemäß Fig. 1 und 4 liegt der Schnellschlussventilkolben 13 mit seinem Vorsprung 20 an der Regelventilkegelrückseite 11 an, so dass der Schnellschlussventilsitz 21 für Dampf unpassierbar ist. Zwar kann in Fig. 1 und 4 die Dampfströmung 5 durch die Durchlassöffnung 15 in den Zwischenraum zwischen dem Schnellschlussventilkolben 13 und dem Regelventilkegel 8 gelangen, das Weiterströmen über den Schnellschlussventilsitz 21 zu der Dampfaustrittsöffnung 4 hin ist jedoch unterbunden. Dadurch ist die Schnellschlussfunktion des Regel-Schnellschluss-Ventils 1 erzielt.

Im Regelbetrieb des Regel-Schnellschluss-Ventils 1 ist der Schnellschlussventilkolben 13 von dem Regelventilkegel 8 abgehoben angeordnet, so dass an den Regelventilsitz 9 durch die Durchlassöffnungen 15 via den Schnellschlussventilsitz 21 die Dampfströmung 5 gelangen kann. Mit der Position des Regelventilkegels 8 bezogen auf den konischen Gehäuseabschnitt 6 ist der Massenstrom der Dampfströmung 5 an dem Regelventilsitz 9 regelbar. Wird das Regel-Schnellschluss-Ventil 1 in Schnellschluss gebracht, so ist via die Schnellschlussventilspindeln 14 der Schnellschlussventilkolben 13 mit seinem Vorsprung 20 an die Regelventilkegelrückseite 11 angelegt, so dass der Schnellschlussventilsitz 21 für die Dampfströmung 5 unpassierbar ist. Dadurch ist ein Durchströmen von der Dampfeintrittsöffnung 3 zu der Dampfaustrittsöffnung 4 unterbunden, unabhängig davon, in welcher Regelposition der Regelventilkegel 8 sich befindet. Somit ist ein schnelles Schließen des Regel-Schnellschluss-Ventils 1 erzielt, ohne dass die Position des Regelventilkegels 8 verändert zu werden braucht.

## Patentansprüche

1. Regel-Schnellschluss-Ventil für eine Dampfturbine, mit einem Ventilgehäuse (2) und einem Regelventilkegel (8), der in dem Ventilgehäuse (2) entlang seiner Mittelachse verschiebbar angeordnet ist,
wodurch der Regelventilkegel (8) in eine Offenstellung, in der der Regelventilkegel (8) mit seinem Regelventilkegelmantel (10) von dem Ventilgehäuse (2) abgehoben ist, und in eine Geschlossenstellung bringbar ist, in der der Regelventilkegel (8) mit seinem Regelventilkegelmantel (10) an dem Ventilgehäuse (2) anliegt, sowie einem Schnellschlussventilkolben (13), der der dem Regelventilkegelmantel (8) abgewandten Regelventilkegelrückseite (11) zugewandt in dem Ventilgehäuse (2) angeordnet ist und an seinem Außenumfangsrand (20) an dem Ventilgehäuse (2) stets dampfdicht anliegt sowie eine Durchlassöffnung (15) aufweist, durch die Dampf (5) von der dem Regelventilkegel (8) abgewandten Seite des Schnellschlussventilkolbens (13) zu der dem Regelventilkegel (8) zugewandten Seite des Schnellschlussventilkolbens (13) passierbar ist,
wobei der Schnellschlussventilkolben (13) in dem Ventilgehäuse (2) parallel zur Mittelachse des Regelventilkegels (8) verschiebbar angeordnet und **dadurch** an die Regelventilkegelrückseite (11) anlegbar ist,
wodurch die Durchlassöffnung (15) für den Dampf (5) unpassierbar ist.

2. Regel-Schnellschluss-Ventil gemäß Anspruch 1,
wobei das Ventilgehäuse (2) eine Dampfeintrittsöffnung (3), die dem Schnellschlussventilkolben (13) zugewandt angeordnet ist, und eine Dampfaustrittsöffnung (4) aufweist, die dem Regelventilkegel (8) zugewandt angeordnet ist.

3. Regel-Schnellschluss-Ventil gemäß Anspruch 1 oder 2,
wobei das Ventilgehäuse (2) einen konischen Gehäuseabschnitt (6), mit dem der Regelventilkegel (8) mit seinem Regelventilkegelmantel (10) einen Regelventilsitz (9) bildet, und einen zylindrischen Gehäuseabschnitt (7) aufweist, von dem der Schnellschlussventilkolben (13) geführt ist.

4. Regel-Schnellschluss-Ventil gemäß Anspruch 3,
wobei der Schnellschlussventilkolben (13) einen Kolbenring (16) aufweist, der an dem zylindrischen Gehäuseabschnitt (7) gleitbar anliegt.

5. Regel-Schnellschluss-Ventil gemäß einem der Ansprüche 1 bis 4,
wobei der Schnellschlussventilkolben (13) an seinem Außenrand einen der Regelventilkegelrückseite (11) zugewandten, umlaufenden Vorsprung (20) aufweist, mit dem der Schnellschlussventilkolben (13) an die Regelventilkegelrückseite (11) anlegbar ist, so dass die Durchlassöffnung (15) für den Dampf (5) unpassierbar ist.

6. Regel-Schnellschluss-Ventil gemäß einem der Ansprüche 1 bis 5,
wobei die Mittelachse des Regelventilkegels (8) und die Mittelachse des Schnellschlussventilkolbens (13) zusammenfallen.

7. Regel-Schnellschluss-Ventil gemäß Anspruch 6,
wobei der Regelventilkegel (8) eine Regelventilspindel (12) und der Schnellschlussventilkolben (13) mindestens eine Schnellschlussventilspindel (14) aufweisen,
wobei die Spindeln (12, 14) parallel zu den Mittelachsen längsverschiebbar sind.

8. Regel-Schnellschluss-Ventil gemäß Anspruch 7,
wobei die Regelventilspindel (12) an der Regelventilkegelrückseite (11) angebracht ist und durch den Schnellschlussventilkolben (13) hindurch geführt angeordnet ist.

9. Regel-Schnellschluss-Ventil gemäß Anspruch 8,
wobei das Ventilgehäuse (2) einen Gehäusewandabschnitt (17) aufweist, der für die Regelventilspindel (12) und für die Schnellschlussventilspindel (14) jeweils ein Spindelführungsloch (18) aufweist, durch die das entsprechende Spindel (12, 14) geführt ist.

10. Regel-Schnellschluss-Ventil gemäß Anspruch 9,
wobei jede Spindel (12, 14) außerhalb des Gehäusewandabschnitts (17) mit einem Tellerfederpaket (19) zur Betätigung der jeweiligen Spindel (12, 14) versehen ist.
